# FASCICULE DE BREVET EUROPEEN

(11) **EP 3 175 090 B1**
(45) Date de publication et mention de la délivrance du brevet: **22.05.2019**
(21) Numéro de dépôt: 15753725.9
(22) Date de dépôt: 21.07.2015
(51) Int. Cl.: F01D 19/00, F02C 7/277

(54) **DISPOSITIF PNEUMATIQUE DE RÉACTIVATION RAPIDE D'UN TURBOMOTEUR, ARCHITECTURE D'UN SYSTÈME PROPULSIF D'UN HÉLICOPTÈRE MULTI-MOTEUR ÉQUIPÉ D'UN TEL DISPOSITIF, HÉLICOPTÈRE ET PROCÉDÉ CORRESPONDANT**
PNEUMATISCHE VORRICHTUNG ZUR SCHNELLEN REAKTIVIERUNG EINES TURBINENMOTORS, ARCHITEKTUR FÜR EIN ANTRIEBSSYSTEM EINES MEHRMOTORIGEN HUBSCHRAUBERS MIT EINER DERARTIGEN VORRICHTUNG, ENTSPRECHENDER HUBSCHRAUBER UND ENTSPRECHENDES VERFAHREN
PNEUMATIC DEVICE FOR RAPIDLY REACTIVATING A TURBINE ENGINE, ARCHITECTURE FOR A PROPULSION SYSTEM OF A MULTI-ENGINE HELICOPTER PROVIDED WITH SUCH A DEVICE, CORRESPONDING HELICOPTER AND METHOD

(30) Priorité: 28.07.2014 FR 1457282
(43) Date de publication de la demande: 07.06.2017
(73) Titulaire: Safran Helicopter Engines, 64510 Bordes (FR)
(72) Inventeur: THIRIET, Romain, F-64110 Jurancon (FR); MOULON, Frédéric, F-64000 Pau (FR); SERGHINE, Camel, F-64510 Boeil-Bezing (FR)
(74) Mandataire: Gevers & Orès
(86) Numéro de dépôt international: PCT/FR2015/052009
(87) Numéro de publication internationale: WO 2016/016547

(56) Documents cités:
- WO-A1-92/05351
- WO-A2-2012/059671
- FR-A1- 2 992 024
- GB-A- 1 476 059

## Description

### 1. Domaine technique de l'invention

L'invention concerne un dispositif pneumatique autonome de réactivation rapide d'un turbomoteur. L'invention concerne aussi une architecture d'un système propulsif d'un hélicoptère multi-moteur -en particulier bimoteur ou trimoteur- équipé d'au moins un tel dispositif de réactivation rapide. L'invention concerne également un hélicoptère comprenant un système propulsif présentant une telle architecture.

### 2. Arrière-plan technologique

Un hélicoptère bimoteur ou trimoteur présente de manière connue un système propulsif comprenant deux ou trois turbomoteurs, chaque turbomoteur comprenant un générateur de gaz et une turbine libre entrainée en rotation par le générateur de gaz, et solidaire d'un arbre de sortie. L'arbre de sortie de chaque turbine libre est adapté pour mettre en mouvement une boite de transmission de puissance, qui entraîne elle-même le rotor de l'hélicoptère équipé de pales à pas variable.

Il est connu que les turbomoteurs de l'hélicoptère fonctionnent à des régimes qui dépendent des conditions de vol de l'hélicoptère. Dans tout le texte qui suit, un hélicoptère est dit en situation de vol de croisière lorsqu'il évolue dans des conditions normales, au cours de toutes les phases du vol, hors phases transitoires de décollage, de montée, d'atterrissage ou de vol stationnaire. Dans tout le texte qui suit, un hélicoptère est dit en situation critique de vol lorsqu'il est nécessaire qu'il dispose de la puissance totale installée, c'est-à-dire dans les phases transitoires de décollage, de montée, d'atterrissage et de régime dans lequel un des turbomoteurs est défaillant, désigné par l'acronyme anglais OEI (One Engine Inoperative).

Il est connu que lorsque l'hélicoptère est en situation de vol de croisière, les turbomoteurs fonctionnent à des niveaux de puissance faibles, inférieurs à leur puissance maximale continue. Ces faibles niveaux de puissance entraînent une consommation spécifique (ci-après, Cs) définie comme le rapport entre la consommation horaire de carburant par la chambre de combustion du turbomoteur et la puissance mécanique fournie par ce turbomoteur, supérieure de l'ordre de 30% à la Cs de la puissance maximale de décollage, et donc une surconsommation en carburant en vol de croisière.

En outre, les turbomoteurs d'un hélicoptère sont conçus de manière surdimensionnée pour pouvoir maintenir l'hélicoptère en vol en cas de panne de l'un des moteurs. Cette situation de vol correspond au régime OEI décrit ci-dessus. Cette situation de vol survient suite à la perte d'un moteur et se traduit par le fait que chaque moteur en fonctionnement fournit une puissance bien au-delà de sa puissance nominale pour permettre à l'hélicoptère de faire face à une situation périlleuse, puis de pouvoir poursuivre son vol.

D'autre part, les turbomoteurs sont également surdimensionnés pour pouvoir assurer le vol dans tout le domaine de vol spécifié par l'avionneur et notamment le vol à des altitudes élevées et par temps chaud. Ces points de vol, très contraignants, notamment lorsque l'hélicoptère a une masse proche de sa masse maximale de décollage, ne sont rencontrés que dans certains cas d'utilisation.

Ces turbomoteurs surdimensionnés sont pénalisants en termes de masse et de consommation de carburant. Afin de réduire cette consommation en vol de croisière, il est envisagé de mettre en veille en vol l'un des turbomoteurs.. Le ou les moteurs actifs fonctionnent alors à des niveaux de puissance plus élevés pour fournir toute la puissance nécessaire et donc à des niveaux de Cs plus favorables.

Les demandeurs ont proposé dans les demandes FR1151717 et FR1359766, des procédés d'optimisation de la consommation spécifique des turbomoteurs d'un hélicoptère par la possibilité de placer au moins un turbomoteur dans un régime de puissance stabilisée, dit continu, et au moins un turbomoteur dans un régime de veille particulier duquel il peut sortir de manière urgente ou normale, selon les besoins. Une sortie du régime de veille est dite normale lorsqu'un changement de situation de vol impose l'activation du turbomoteur en veille, par exemple lorsque l'hélicoptère va passer d'une situation de vol de croisière à une phase d'atterrissage. Une telle sortie de veille normale s'effectue sur une durée de 10s à 1 min. Une sortie du régime de veille est dite rapide lorsqu'une panne ou un déficit de puissance du moteur actif intervient ou que les conditions de vol deviennent soudainement difficiles. Une telle sortie de veille rapide s'effectue sur une durée inférieure à 10s.

La sortie d'un régime de veille d'un turbomoteur est obtenue par exemple par le biais d'un pack de redémarrage du turbomoteur associé à un dispositif de stockage d'énergie tel qu'un stockage électrochimique du type batterie Li-Ion ou un stockage électrostatique du type surcapacité, qui permet de fournir au turbomoteur l'énergie nécessaire pour réactiver et atteindre rapidement un régime de fonctionnement nominal.

Un tel pack de réactivation rapide du turbomoteur en veille présente l'inconvénient d'alourdir sensiblement le poids total du turbomoteur. Le gain en consommation de carburant obtenu par la mise en veille du turbomoteur est donc en partie perdu par le surpoids occasionné par le dispositif de réactivation et le dispositif de stockage d'énergie associé, en particulier lorsque chaque turbomoteur est équipé d'un tel dispositif de réactivation d'urgence.

En outre, ces composants électrotechniques peuvent être dépendants de l'architecture électrique de l'hélicoptère sur lequel ils sont montés.

Les inventeurs ont donc cherché à concilier des problèmes a priori incompatibles que sont la possibilité de placer l'hélicoptère en phase de vol économique, c'est-à-dire de mettre au moins un turbomoteur en veille, sans générer un surpoids trop important de l'ensemble du système propulsif, mais tout en permettant une sortie rapide du régime de veille.

En d'autres termes, les inventeurs ont cherché à proposer un nouveau dispositif de réactivation rapide d'un turbomoteur et une architecture nouvelle du système propulsif d'un hélicoptère bimoteur ou trimoteur.

Dans ce contexte, les documents WO 2012/059671 A2, GB 1 476 059 et WO 92/05351 de l'art antérieur définissent des systèmes de stockage d'énergie.

### 3. Objectifs de l'invention

L'invention vise à fournir un dispositif de réactivation rapide d'un turbomoteur qui pallie les inconvénients des solutions antérieures.

L'invention vise aussi à fournir une architecture nouvelle du système propulsif d'un hélicoptère multi-moteur.

L'invention vise aussi à fournir une architecture d'un système propulsif d'un hélicoptère multi-moteur qui autorise la mise en veille d'un turbomoteur et sa réactivation rapide.

L'invention vise aussi à fournir, dans au moins un mode de réalisation de l'invention, une architecture qui présente une masse et un volume non rédhibitoires pour pouvoir être embarquée dans un hélicoptère.

L'invention vise aussi à fournir, dans au moins un mode de réalisation de l'invention, une architecture qui présente un coût inférieur aux architectures de l'art antérieur à performances égales.

L'invention vise aussi à fournir un procédé de réactivation rapide d'un turbomoteur.

### 4. Exposé de l'invention

Pour ce faire, l'invention concerne un dispositif de réactivation rapide d'un turbomoteur d'un hélicoptère, caractérisé en ce qu'il comprend :
- une turbine pneumatique reliée mécaniquement audit turbomoteur de manière à pouvoir l'entrainer en rotation et assurer sa réactivation,
- un stockeur pneumatique relié à ladite turbine pneumatique par le biais d'un circuit pneumatique d'alimentation en gaz sous pression de ladite turbine pneumatique,
- une vanne pneumatique à ouverture rapide commandée agencée sur le circuit pneumatique entre ledit stockeur et ladite turbine pneumatique et adaptée pour être placée sur commande au moins dans une position ouverte dans laquelle le gaz peut alimenter ladite turbine pneumatique, permettant ainsi une réactivation dudit turbomoteur, ou dans une position fermée dans laquelle ladite turbine pneumatique n'est plus alimentée en gaz sous pression.

Un dispositif de réactivation d'un turbomoteur selon l'invention prévoit donc un dispositif pneumatique- de préférence complètement indépendant du réseau électrique de l'hélicoptère sur lequel un tel turbomoteur est destiné à être monté - pour assurer la réactivation du turbomoteur.

Un dispositif de réactivation rapide d'un turbomoteur vise principalement à réactiver rapidement un turbomoteur en veille pour qu'il puisse rapidement sortir du régime de veille dans lequel il a été placé pour fournir à nouveau de la puissance mécanique. Selon une autre application, un dispositif de réactivation rapide peut également faire office de dispositif de démarrage d'un turbomoteur, c'est-à-dire de mise en route d'un turbomoteur, sans mise en veille préalable. Cela étant, dans toute la description qui suit, il est essentiellement discuté l'utilisation du dispositif selon l'invention en tant que dispositif de réactivation d'un turbomoteur en veille.

Un turbomoteur comprend de manière connue un générateur de gaz et une turbine libre alimentée par le générateur de gaz et reliée à une boîte de transmission de puissance. De préférence, un dispositif de réactivation selon l'invention prévoit que le générateur de gaz du turbomoteur est entraîné en rotation par la turbine pneumatique adaptée pour transformer la puissance pneumatique du gaz sous pression qui alimente la turbine en une puissance mécanique d'entraînement du générateur de gaz.

L'alimentation en gaz de la turbine pneumatique est réalisée par la coopération d'un stockeur pneumatique et d'une vanne à ouverture rapide commandée.

Un tel dispositif de réactivation est donc indépendant du réseau électrique de l'hélicoptère et ne nécessite pas de batteries de stockage volumineuses. La solution proposée permet donc d'assurer une réactivation rapide d'un turbomoteur, en particulier un turbomoteur placé en un régime de veille, sans générer des problèmes d'encombrement, de masse et de coût.

En outre, un dispositif selon l'invention est simple d'utilisation et peut-être testé sur banc avant son intégration sur un hélicoptère.

Avantageusement, un dispositif selon l'invention comprend en outre un détendeur agencé sur le circuit pneumatique entre la vanne pneumatique et la turbine pneumatique et configuré pour réguler la pression du gaz alimentant la turbine pneumatique.

Un détendeur permet donc d'adapter la pression du gaz fourni à la turbine pneumatique au type de turbine pneumatique utilisé et au type de stockeur pneumatique utilisé. Selon une variante, le stockeur pneumatique comprend un gaz haute pression, par exemple entre 200 et 400 bar, et la turbine pneumatique est alimentée par l'intermédiaire du détendeur, par un gaz présentant une pression entre 5 et 50 bar.

Avantageusement et selon l'invention, la turbine pneumatique est reliée mécaniquement au turbomoteur par le biais d'au moins une roue libre.

La présence de la roue libre permet d'éviter un entraînement spontané de la turbine pneumatique par le générateur de gaz lorsque ce dernier fournit de la puissance mécanique. Avantageusement, la roue libre est montée sur une boite d'accessoires du turbomoteur.

Avantageusement et selon l'invention, le stockeur pneumatique contient un mélange de gaz comprenant en masse, au moins 50% d'un gaz neutre, et un agent d'extinction incendie.

Un tel mélange de gaz permet non seulement d'alimenter en gaz la turbine pneumatique pour assurer la réactivation du turbomoteur, mais également d'alimenter un système d'extinction incendie agencé, par exemple, au voisinage du turbomoteur pour permettre l'extinction de tout incendie éventuel de ce turbomoteur. Le gaz neutre peut être de tout type, tel que l'azote, l'hélium ou l'argon. L'agent d'extinction incendie est par exemple de l'halon.

Un dispositif selon cette variante, en combinaison avec un système d'extinction incendie, rend donc inutile d'équiper les hélicoptères de bouteilles d'extinction incendie dédiées.

Avantageusement et selon l'invention, la turbine comprend une prise d'alimentation basse pression configurée pour pouvoir effectuer un test d'intégrité de la chaine cinématique formée de la turbine pneumatique et de la roue libre.

Une telle prise d'alimentation permet de tester la chaine cinématique formée de la turbine pneumatique et de la roue libre et donc de garantir que le turbomoteur pourra effectivement être réactivé rapidement en cas d'urgence. Il s'agit donc d'un moyen de mettre en place des mesures de contrôle et de sécurité. Un tel test peut par exemple être effectué au sol par l'utilisation d'un compresseur d'air du type groupe de parc. Ce test peut également être effectué en vol par un prélèvement d'air en sortie de compresseur sur l'un ou l'autre des turbomoteurs.

Avantageusement et selon l'invention, la vanne pneumatique est commandée en position par un équipement électronique et commandée en ouverture par un équipement pyrotechnique.

Un équipement pyrotechnique permet une ouverture rapide de la vanne pneumatique et donc une réactivation rapide du turbomoteur.

L'invention concerne également une architecture d'un système propulsif d'un hélicoptère multi-moteur comprenant des turbomoteurs reliés à une boite de transmission de puissance, caractérisée en ce qu'elle comprend :
- au moins un turbomoteur parmi lesdits turbomoteurs, dit turbomoteur hybride, apte à fonctionner dans au moins un régime de veille au cours d'un vol stabilisé de l'hélicoptère, les autres turbomoteurs fonctionnant seuls au cours de ce vol stabilisé,
- au moins un dispositif de réactivation rapide d'un turbomoteur hybride selon l'invention adapté pour pouvoir sortir ce turbomoteur hybride dudit régime de veille et atteindre un régime, dit régime nominal, dans lequel il fournit une puissance mécanique à ladite boite de transmission de puissance.

Un dispositif de réactivation d'un turbomoteur selon l'invention est particulièrement destiné à être intégré dans une architecture d'un système propulsif d'un hélicoptère multi-moteur comprenant au moins un turbomoteur apte à être mis en veille. Le dispositif de réactivation pneumatique permet d'assurer la réactivation rapide du turbomoteur en veille en cas de besoin.

Avantageusement, une architecture selon l'invention comprend au moins un dispositif d'extinction incendie agencé au voisinage d'un turbomoteur et relié à ladite vanne pneumatique d'un dispositif de démarrage d'urgence par le biais d'une conduite, dite conduite incendie, de sorte que ledit gaz dudit stockeur pneumatique de ce dispositif de réactivation puisse être conduit sur commande de ladite vanne vers ledit dispositif d'extinction.

Une architecture selon cette variante comprend au moins un dispositif d'extinction incendie agencé au voisinage d'un turbomoteur pour pouvoir éteindre un incendie au sein du turbomoteur en utilisant le circuit pneumatique du dispositif de réactivation rapide. Pour ce faire, le stockeur hydropneumatique contient avantageusement un mélange de gaz comprenant en masse, au moins 50% d'un gaz neutre, et un agent d'extinction incendie.

Avantageusement, une architecture selon l'invention comprend deux turbomoteurs hybrides et deux dispositifs de démarrage d'urgence selon l'invention, chaque turbomoteur hybride étant associé à un dispositif de réactivation dédié.

Selon cette variante, l'architecture présente une alimentation pneumatique distincte pour chaque turbine pneumatique de démarrage de chaque turbomoteur hybride.

Avantageusement, une architecture selon l'invention comprend deux turbomoteurs hybrides et un unique dispositif de réactivation selon l'invention qui comprend deux turbines pneumatiques reliées respectivement à chaque turbomoteur hybride, ladite vanne pneumatique étant une vanne trois voies commandée pour orienter le gaz vers ladite turbine pneumatique du turbomoteur hybride à réactiver.

Selon cette variante, la vanne est commandée pour orienter le gaz du circuit pneumatique vers le turbomoteur hybride qui doit être réactivé.

L'invention concerne également un hélicoptère comprenant un système propulsif caractérisé en ce que ledit système propulsif présente une architecture selon l'invention.

L'invention concerne également un procédé de réactivation rapide d'un turbomoteur d'un hélicoptère, caractérisé en ce qu'il comprend :
- une étape de commande d'ouverture d'une vanne pneumatique agencée sur un circuit pneumatique entre un stockeur pneumatique et une turbine pneumatique reliée mécaniquement audit turbomoteur,
- une étape de cheminement du gaz prélevé vers ladite turbine pneumatique,
- une étape de transformation par ladite turbine pneumatique de la puissance pneumatique dudit gaz sous pression en puissance mécanique pour assurer la réactivation du turbomoteur.

L'invention concerne également un dispositif de réactivation d'un turbomoteur, une architecture d'un système propulsif d'un hélicoptère multi-moteurs, un hélicoptère équipé d'un système propulsif présentant une telle architecture, et un procédé de réactivation d'un turbomoteur, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un dispositif de réactivation d'un turbomoteur selon un mode de réalisation de l'invention,
- la figure 2 est une vue schématique d'une architecture d'un système propulsif d'un hélicoptère selon un mode de réalisation de l'invention,
- la figure 3 est une vue schématique d'une architecture d'un système propulsif d'un hélicoptère selon un autre mode de réalisation de l'invention,
- la figure 4 est une vue schématique d'une architecture d'un système propulsif d'un hélicoptère selon un autre mode de réalisation de l'invention,
- la figure 5 est une vue schématique d'une architecture d'un système propulsif d'un hélicoptère selon un autre mode de réalisation de l'invention,
- la figure 6 est une vue schématique d'un hélicoptère comprenant un système propulsif présentant une architecture selon l'invention.

### 6. Description détaillée d'un mode de réalisation de l'invention

Sur les figures, les échelles et les proportions ne sont pas respectées et ce, à des fins d'illustration et de clarté.

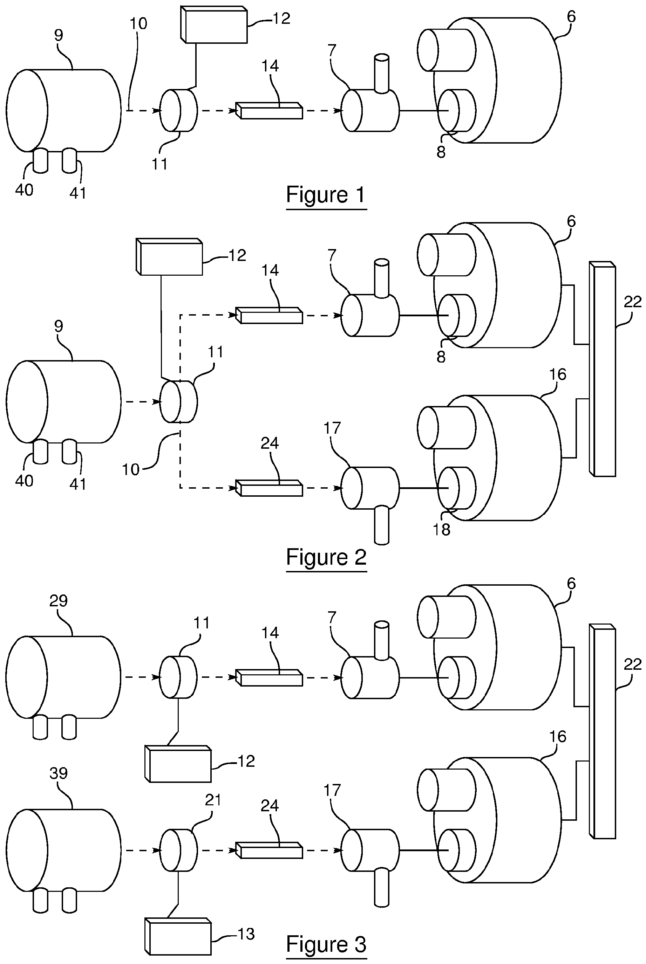

La figure 1 est une vue schématique d'un dispositif de réactivation d'un turbomoteur 6 selon un mode de réalisation de l'invention.

Un tel dispositif comprend une turbine 7 pneumatique reliée mécaniquement au turbomoteur 6 par le biais d'une roue libre 8. Cette turbine 7 pneumatique peut être une turbine radiale ou axiale, à un ou plusieurs étages. Elle a pour fonction de transformer la puissance pneumatique qu'elle reçoit en une puissance mécanique permettant d'assurer la réactivation du turbomoteur 6.

Cette turbine 7 pneumatique est de préférence montée sur le turbomoteur 6 par le bais d'une boîte d'accessoires, non représentée sur la figure 1.

Le dispositif comprend en outre un stockeur 9 pneumatique relié à la turbine 7 pneumatique par le biais d'un circuit 10 pneumatique d'alimentation en gaz sous pression de cette turbine 7 pneumatique.

L'alimentation de la turbine 7 pneumatique est dépendante d'une vanne 11 pneumatique à ouverture rapide, commandée, qui est agencée sur le circuit 10 pneumatique entre le stockeur 9 et la turbine 7 pneumatique.

Cette vanne 11 pneumatique est, dans le mode de réalisation de la figure 1, une vanne deux voies commandée par un dispositif 12 de commande, qui est de préférence le calculateur de commande du turbomoteur 6, qui permet en outre de définir le régime de fonctionnement du turbomoteur.

Lorsque la vanne 11 est commandée en ouverture, le gaz du stockeur 9 est éjecté vers la turbine 7 pneumatique pour qu'elle puisse transformer la puissance pneumatique du gaz reçu en une puissance mécanique en sortie.

Le circuit 10 pneumatique comprend en outre un détendeur 14 agencé entre le stockeur 9 et la turbine 7 pneumatique pour réguler la pression du gaz alimentant la turbine 7 pneumatique.

Le stockeur 9 pneumatique comprend en outre un capteur de pression 40 et une soupape de sécurité 41. Le stockeur 9 pneumatique présente par exemple une capacité d'azote à 250 bar.

Le dispositif de réactivation de la figure 1 équipe avantageusement une architecture d'un système propulsif d'un hélicoptère bimoteur tel que représenté sur la figure 2.

Selon le mode de réalisation de la figure 2, le système propulsif comprend deux turbomoteurs 6, 16 reliés à une boîte 22 de transmission de puissance, qui entraîne elle-même un rotor de l'hélicoptère (non représenté sur les figures). Chaque turbomoteur est un turbomoteur hybride, apte à être placé dans au moins un régime de veille au cours d'un vol stabilisé de l'hélicoptère, dont il peut ressortir rapidement par le biais d'un dispositif de réactivation selon l'invention. Un turbomoteur comprend de manière connue un générateur de gaz, une chambre de combustion et une turbine libre.

Le régime de veille est par exemple un des régimes de fonctionnement suivant :
- un régime de veille, dit ralenti usuel, dans lequel la chambre de combustion est allumée et l'arbre du générateur de gaz tourne à une vitesse comprise entre 60 et 80% de la vitesse nominale,
- un régime de veille, dit super-ralenti usuel, dans lequel la chambre de combustion est allumée et l'arbre du générateur de gaz tourne à une vitesse comprise entre 20 et 60% de la vitesse nominale,
- un régime de veille, dit super-ralenti assisté, dans lequel la chambre de combustion est allumée et l'arbre du générateur de gaz tourne, assisté mécaniquement, à une vitesse comprise entre 20 et 60% de la vitesse nominale,
- un régime de veille, dit vireur, dans lequel la chambre de combustion est éteinte et l'arbre du générateur de gaz tourne, assisté mécaniquement, à une vitesse comprise entre 5 et 20% de la vitesse nominale,
- un régime de veille, dit d'arrêt, dans lequel la chambre de combustion est éteinte et l'arbre du générateur de gaz est à l'arrêt complet.

Le dispositif de réactivation comprend, en plus des éléments décrits en lien avec la figure 1, une turbine 17 pneumatique reliée au turbomoteur 16 par le biais d'une roue libre 18. En outre, le circuit 10 pneumatique s'étend du stockeur 9 pneumatique jusqu'à la turbine 17 pneumatique et à la turbine 7 pneumatique.

La vanne 11 commandée est, selon ce mode de réalisation, une vanne trois voies adaptée pour permettre, sur commande, soit l'alimentation de la turbine 17 pneumatique reliée au turbomoteur 16, soit l'alimentation de la turbine 7 pneumatique du turbomoteur 6. La commande est fonction du turbomoteur en veille devant sortir en urgence de son régime de veille.

Le principe de fonctionnement du dispositif de réactivation de cette architecture est, pour chaque turbomoteur 6, 16, identique à celui décrit en lien avec la figure 1.

La figure 3 est une architecture selon un autre mode de réalisation de l'invention. Selon ce mode de réalisation, un dispositif de réactivation distinct est prévu pour chaque turbomoteur. En d'autres termes, un stockeur 29, 39 pneumatique est associé à chaque turbine 7, 17 pneumatique et une vanne 11, 21, deux voies, est associée à chaque stockeur 29, 39 pour assurer l'alimentation des turbines et le redémarrage du turbomoteur correspondant. Les vannes 11, 21 sont commandées respectivement par des calculateurs 12, 13, un calculateur par dispositif. En variante, un seul calculateur peut piloter les deux vannes. En outre, chaque turbine est associée à un détendeur 14, 24 dédié et destiné à réguler la pression du gaz alimentant la turbine correspondante.

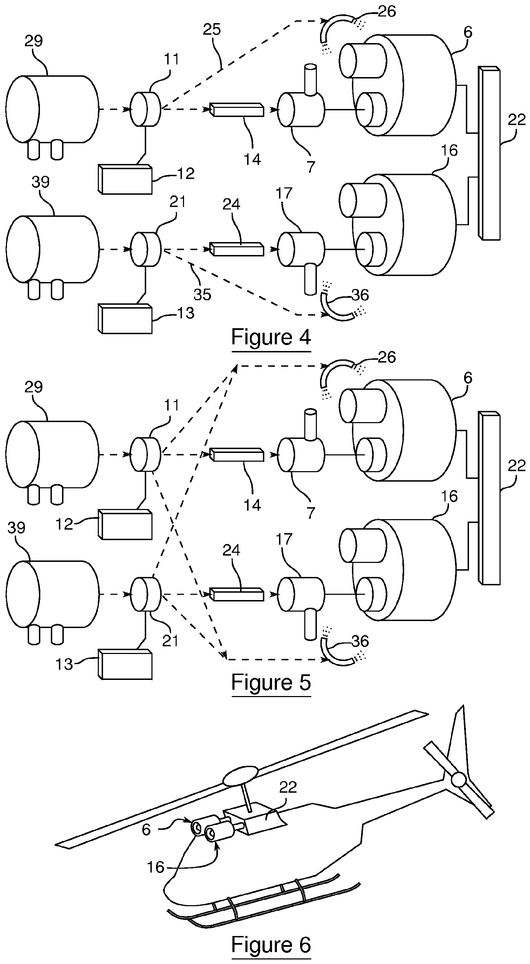

L'architecture de la figure 4 s'appuie sur l'architecture de la figure 3 et comprend en plus des éléments décrits en lien avec la figure 3, un système d'extinction incendie. Ce système d'extinction comprend un dispositif d'extinction incendie par turbomoteur. L'architecture de la figure 4 comprend donc deux dispositifs d'extinction. Chaque dispositif comprend une conduite 25, 35 incendie agencée entre la vanne 21, 31 correspondante et une lance incendie 26, 36 agencée au voisinage et en direction du turbomoteur 6, 16 correspondant de manière à pouvoir projeter du gaz vers le turbomoteur en cas d'incendie. Selon ce mode de réalisation, les vannes 11, 21 sont des vannes trois voies. En cas de détection d'un feu au voisinage d'un turbomoteur, par exemple le turbomoteur 6, par un capteur incendie, l'unité 12 commande l'ouverture de la vanne 11 correspondant au turbomoteur 6 pour que le gaz stocké dans le stockeur 29 (formé d'un mélange d'un gaz neutre et d'un agent d'extinction incendie du type halon) soit propulsé vers la lance incendie 26 pour éteindre le feu du turbomoteur 6.

L'architecture de la figure 5 est une variante de l'architecture de la figure 4 dans laquelle chaque lance incendie 26, 36 peut être alimentée par chaque stockeur pneumatique 29, 39 par commande de la vanne 11, 21 qui sont des vannes 4 voies. Pour ce faire, chaque lance incendie est alimentée par deux conduites incendies distinctes. Une telle architecture permet d'utiliser les gaz de chaque dispositif de réactivation pour traiter un incendie de l'un ou l'autre des turbomoteurs.

La figure 6 est une vue schématique d'un hélicoptère bimoteur comprenant un système propulsif présentant une architecture selon l'invention. Le système propulsif comprend notamment deux turbomoteurs 6, 16 adaptés pour entraîner en rotation un rotor par le biais de la boite 22 de transmission de puissance. Sur cette figure, les dispositifs de réactivation ne sont pas représentés à des fins de clarté. Seuls les turbomoteurs 6, 16 sont représentés, étant entendu que chaque turbomoteur est équipé d'un dispositif de réactivation selon l'invention.

Le principe d'utilisation d'un dispositif de réactivation d'un turbomoteur au sein d'une architecture bimoteur tel que représenté par la figure 2 est le suivant :
- lorsque les conditions de vol sont favorables, un ordre est émis pour placer un turbomoteur en veille pour économiser du carburant (régime de veille choisi parmi les régimes de veille cités ci-dessus),
- les calculateurs des turbomoteurs déterminent alors quel turbomoteur peut être mis en veille et ordonnent sa mise en veille (dans toute la suite, on considère que le turbomoteur 6 est mis en veille et que seul le turbomoteur 16 fournit de la puissance à la boîte 22 de transmission de puissance),
- le turbomoteur 6 est en régime de veille (ce régime de veille peut être l'un des régimes de veille susmentionnés, à chambre allumée ou éteinte, assistée mécaniquement ou non),
- au cours du vol, le turbomoteur 16 tombe subitement en panne ou le pilote décide de réactiver rapidement le turbomoteur 6 pour une manoeuvre d'urgence particulière,
- la chambre de combustion du turbomoteur 6 est alors rapidement rallumée (cas d'un régime de veille chambre éteinte),
- après un délai prédéterminé, l'unité 12 de commande ordonne l'ouverture de la vanne 11 vers le turbomoteur 6,
- la turbine 7 pneumatique passe alors rapidement (dans un délai inférieur à la seconde) de 0 tr/min à la vitesse d'accostage du générateur de gaz initialement en régime de veille en transformant la puissance pneumatique en une puissance mécanique permettant d'entraîner le générateur de gaz du turbomoteur 6 par le biais de la roue libre 8,
- la turbine 7 pneumatique poursuit l'entraînement du turbomoteur 6 pendant une durée courte, par exemple inférieure à 3s, au cours de laquelle le turbomoteur a atteint son régime d'urgence,
- la réactivation rapide du turbomoteur 6 est donc obtenue.

La vitesse d'accostage correspond à la vitesse de veille du générateur de gaz divisée par le rapport de réduction de vitesses entre l'arbre du générateur de gaz et l'entrée de la boite d'accessoires du turbomoteur sur laquelle est monté le démarreur pneumatique.

Un dispositif selon l'invention permet donc de réactiver rapidement un turbomoteur en veille en ayant recours uniquement à des organes peu coûteux, simples d'utilisation et d'installation, qui peuvent être testés sur bancs.

L'invention ne se limite pas aux seuls modes de réalisation décrits. En particulier, l'architecture peut comprendre trois turbomoteurs pour l'équipement d'un hélicoptère trimoteur et l'homme du métier déterminera aisément sur la base des enseignements du présent texte comment adapter les modes de réalisation décrits à un système propulsif multi-moteur, notamment trimoteur.

Bien que dédiée aux phases de réactivation rapides, l'invention peut également être utilisée au cours d'un démarrage rapide au sol ou au cours d'un redémarrage rapide en vol.

## Revendications

1. Dispositif de réactivation rapide d'un turbomoteur (6) d'un hélicoptère, **caractérisé en ce qu'**il comprend :
- une turbine (7) pneumatique reliée mécaniquement audit turbomoteur (6) de manière à pouvoir l'entraîner en rotation et assurer sa réactivation,
- un stockeur (9) pneumatique relié à ladite turbine (7) pneumatique par le biais d'un circuit (10) pneumatique d'alimentation en gaz sous pression de ladite turbine (7) pneumatique,
- une vanne (11) pneumatique à ouverture rapide commandée agencée sur le circuit (10) pneumatique entre ledit stockeur (9) et ladite turbine (7) pneumatique et adaptée pour être placée sur commande au moins dans une position ouverte dans laquelle le gaz peut alimenter ladite turbine (7) pneumatique, permettant ainsi une réactivation dudit turbomoteur (6), ou dans une position fermée dans laquelle ladite turbine (7) pneumatique n'est plus alimentée en gaz sous pression.

2. Dispositif selon la revendication 1, **caractérisé en ce qu'**il comprend en outre un détendeur (14) agencé sur ledit circuit (10) pneumatique entre ladite vanne (11) pneumatique et ladite turbine (7) pneumatique et configuré pour réguler la pression dudit gaz alimentant ladite turbine (7) pneumatique.

3. Dispositif selon l'une des revendications 1 ou 2, **caractérisé en ce que** ladite turbine (7) pneumatique est reliée mécaniquement audit turbomoteur (6) par le biais d'au moins une roue (8) libre.

4. Dispositif selon l'une des revendications 1 à 3, **caractérisé en ce que** ledit stockeur (9) pneumatique contient un mélange de gaz comprenant en masse, au moins 50% d'un gaz neutre, et un agent d'extinction incendie.

5. Dispositif selon l'une des revendications 1 à 4, **caractérisé en ce que** ladite turbine (7) pneumatique comprend une prise d'alimentation basse pression configurée pour pouvoir effectuer un test d'intégrité de la chaine cinématique formée de la turbine (7) pneumatique et de la roue (8) libre.

6. Dispositif selon l'une des revendications 1 à 5, **caractérisé en ce que** ladite vanne (11) pneumatique est commandée en position par un équipement électronique et commandée en ouverture par un équipement pyrotechnique.

7. Architecture d'un système propulsif d'un hélicoptère multi-moteur comprenant des turbomoteurs (6, 16) reliés à une boite (22) de transmission de puissance,
**caractérisée en ce qu'**elle comprend :
- au moins un turbomoteur (6, 16) parmi lesdits turbomoteurs, dit turbomoteur hybride, apte à fonctionner dans au moins un régime de veille au cours d'un vol stabilisé de l'hélicoptère, les autres turbomoteurs fonctionnant seuls au cours de ce vol stabilisé,
- au moins un dispositif de réactivation rapide d'un turbomoteur hybride selon l'une des revendications 1 à 6 adapté pour pouvoir sortir ce turbomoteur hybride dudit régime de veille et atteindre un régime, dit régime nominal, dans lequel il fournit une puissance mécanique à ladite boite de transmission de puissance.

8. Architecture selon la revendication 7, **caractérisée en ce qu'**elle comprend au moins un dispositif (26, 36) d'extinction incendie agencé au voisinage d'un turbomoteur (6, 16) et relié à ladite vanne (11, 21) pneumatique d'un dispositif de réactivation rapide par le biais d'une conduite, dite conduite (25, 35) incendie, de sorte que ledit gaz dudit stockeur (29, 39) pneumatique de ce dispositif de démarrage puisse être conduit sur commande de ladite vanne (11, 21) vers ledit dispositif d'extinction.

9. Architecture selon l'une des revendications 7 ou 8, **caractérisée en ce qu'**elle comprend deux turbomoteurs (6, 16) hybrides et deux dispositifs de réactivation rapide selon l'une des revendications 1 à 6, chaque turbomoteur hybride étant associé à un dispositif de réactivation dédié.

10. Architecture selon l'une des revendications 7 ou 8, **caractérisée en ce qu'**elle comprend deux turbomoteurs (6, 16) hybrides et un unique dispositif de réactivation selon l'une des revendications 1 à 6 qui comprend deux turbines (7, 17) pneumatiques reliées respectivement à chaque turbomoteur (6, 16) hybride, ladite vanne (11) pneumatique étant une vanne trois voies commandée pour orienter le gaz vers ladite turbine pneumatique du turbomoteur hybride à réactiver.

11. Hélicoptère comprenant un système propulsif **caractérisé en ce que** ledit système propulsif présente une architecture selon l'une des revendications 7 à 10.

12. Procédé de réactivation rapide d'un turbomoteur (6) d'un hélicoptère, **caractérisé en ce qu'**il comprend :
- une étape de commande d'ouverture d'une vanne (11) pneumatique agencée sur un circuit (10) pneumatique entre un stockeur (9) pneumatique et une turbine (7) pneumatique reliée mécaniquement audit turbomoteur (6),
- une étape de cheminement du gaz prélevé vers ladite turbine (7) pneumatique,
- une étape de transformation par ladite turbine (7) pneumatique de la puissance pneumatique dudit gaz sous pression en puissance mécanique pour assurer la réactivation du turbomoteur (6).

## Patentansprüche

1. Vorrichtung zur schnellen Reaktivierung eines Turbomotors (6) eines Hubschraubers, **dadurch gekennzeichnet, dass** sie Folgendes umfasst:
- eine pneumatische Turbine (7), die mechanisch mit dem Turbomotor (6) verbunden ist, um ihn in Drehung versetzen und seine Reaktivierung sicherstellen zu können,
- einen pneumatischen Speicher (9), der mit der pneumatischen Turbine (7) über einen pneumatischen Versorgungskreislauf (10) für Druckgas der pneumatischen Turbine (7) verbunden ist,
- ein pneumatisches Absperrorgan (11) mit gesteuerter Schnellöffnung, das auf dem pneumatischen Kreislauf (10) zwischen dem Speicher (9) und der pneumatischen Turbine (7) angeordnet und dazu angepasst ist, auf Befehl zumindest in einer offenen Position, in der das Gas die pneumatische Turbine (7) versorgen kann, um damit eine Reaktivierung des Turbomotors (6) zu ermöglichen, oder in einer geschlossenen Position, in der die pneumatische Turbine (7) nicht mehr mit Druckgas versorgt wird, angebracht zu werden.

2. Vorrichtung nach Anspruch 1, **dadurch gekennzeichnet, dass** sie weiter einen Druckregler (14) umfasst, der auf dem pneumatischen Kreislauf (10) zwischen dem pneumatischen Absperrorgan (11) und der pneumatischen Turbine (7) angeordnet und konfiguriert ist, um den Druck des die pneumatische Turbine (7) versorgenden Gases zu regulieren.

3. Vorrichtung nach einem der Ansprüche 1 oder 2, **dadurch gekennzeichnet, dass** die pneumatische Turbine (7) über zumindest ein freies Rad (8) mechanisch mit dem Turbomotor (6) verbunden ist.

4. Vorrichtung nach einem der Ansprüche 1 bis 3, **dadurch gekennzeichnet, dass** der pneumatische Speicher (9) ein Gasgemisch, das in Masse zumindest 50 % eines neutralen Gases umfasst, und ein Feuerlöschmittel enthält.

5. Vorrichtung nach einem der Ansprüche 1 bis 4, **dadurch gekennzeichnet, dass** die pneumatische Turbine (7) einen Niederdruckversorgungsanschluss umfasst, der konfiguriert ist, um einen Integritätstest der kinematischen Kette durchführen zu können, die von der pneumatischen Turbine (7) und dem freien Rad (8) gebildet wird.

6. Vorrichtung nach einem der Ansprüche 1 bis 5, **dadurch gekennzeichnet, dass** das pneumatische Absperrorgan (11) durch eine elektronische Ausrüstung positionsgesteuert und durch eine pyrotechnische Ausrüstung öffnungsgesteuert wird.

7. Architektur für ein Antriebssystem eines mehrmotorigen Hubschraubers, umfassend Turbomotoren (6, 16), die mit einem Leistungsübertragungsgetriebe (22) verbunden sind,
**dadurch gekennzeichnet, dass** sie Folgendes umfasst:
- zumindest einen Turbomotor (6, 16) aus den Turbomotoren, genannt Hybrid-Turbomotor, der in der Lage ist, während eines stabilisierten Flugs des Hubschraubers in zumindest einem Standby-Betrieb zu arbeiten, wobei die anderen Turbomotoren während dieses stabilisierten Flugs allein arbeiten,
- zumindest eine Vorrichtung zur schnellen Reaktivierung eines Hybrid-Turbomotors nach einem der Ansprüche 1 bis 6, die dazu angepasst ist, diesen Hybrid-Turbomotor aus dem Standby-Betrieb herauszunehmen und einen Betrieb, genannt Nennbetrieb, zu erreichen, in dem er dem Leistungsübertragungsgetriebe mechanische Leistung zuführt.

8. Architektur nach Anspruch 7, **dadurch gekennzeichnet, dass** sie zumindest eine Feuerlöschvorrichtung (26, 36) umfasst, die in der Nähe eines Turbomotors (6, 16) angeordnet und mit dem pneumatischen Absperrorgan (11, 21) einer Vorrichtung zur schnellen Reaktivierung über eine Leitung, genannt Feuerleitung (25, 35), verbunden ist, sodass das Gas des pneumatischen Speichers (29, 39) dieser Startvorrichtung auf Befehl von dem Absperrorgan (11, 21) zur Löschvorrichtung geleitet werden kann.

9. Architektur nach einem der Ansprüche 7 oder 8, **dadurch gekennzeichnet, dass** sie zwei Hybrid-Turbomotoren (6, 16) und zwei Vorrichtungen zur schnellen Reaktivierung nach einem der Ansprüche 1 bis 6 umfasst, wobei jeder Hybrid-Turbomotor einer bestimmten Reaktivierungsvorrichtung zugeordnet ist.

10. Architektur nach einem der Ansprüche 7 oder 8, **dadurch gekennzeichnet, dass** sie zwei Hybrid-Turbomotoren (6, 16) und eine einzige Reaktivierungsvorrichtung nach einem der Ansprüche 1 bis 6 umfasst, die zwei mit jeweils jedem Hybrid-Turbomotor (6, 16) verbundene pneumatische Turbinen (7, 17) umfasst, wobei das pneumatische Absperrorgan (11) ein gesteuertes Dreiwegeabsperrorgan zum Lenken des Gases zu der pneumatischen Turbine des zu reaktivierenden Hybrid-Turbomotors ist.

11. Hubschrauber, umfassend ein Antriebssystem, **dadurch gekennzeichnet, dass** das Antriebssystem eine Architektur nach einem der Ansprüche 7 bis 10 aufweist.

12. Verfahren zur schnellen Reaktivierung eines Turbomotors (6) eines Hubschraubers, **dadurch gekennzeichnet, dass** es Folgendes umfasst:
- einen Schritt zur Steuerung der Öffnung eines pneumatischen Absperrorgans (11), das auf einem pneumatischen Kreislauf (10) zwischen einem pneumatischen Speicher (9) und einer pneumatischen Turbine (7) angeordnet ist, die mechanisch mit dem Turbomotor (6) verbunden ist,
- einen Schritt zur Leitung des entnommenen Gases zu der pneumatischen Turbine (7),
- einen Schritt zur Umwandlung der pneumatischen Leistung des Druckgases in mechanische Leistung durch die pneumatische Turbine (7), um die Reaktivierung des Turbomotors (6) sicherzustellen.

## Claims

1. Device for the rapid reactivation of a helicopter turbine engine (6), **characterised in that** it comprises:
- a pneumatic turbine (7) mechanically connected to said turbine engine (6) so as to be able to rotate it and ensure reactivation thereof,
- a pneumatic storage (9) connected to said pneumatic turbine (7) by means of a pneumatic circuit (10) for supplying pressurised gas to said pneumatic turbine (7),
- a controlled fast-opening pneumatic valve (11) arranged on the pneumatic circuit (10) between said storage (9) and said pneumatic turbine (7) and suitable for being on demand placed at least in an open position in which the gas can supply said pneumatic turbine (7), thus allowing reactivation of said turbine engine (6), or in a closed position in which said pneumatic turbine (7) is no longer supplied with pressurised gas.

2. Device according to claim 1, **characterised in that** it further comprises a pressure reducer (14) arranged on said pneumatic circuit (10) between said pneumatic valve (11) and said pneumatic turbine (7) and configured to regulate the pressure of said gas supplying said pneumatic turbine (7).

3. Device according to either claim 1 or claim 2, **characterised in that** said pneumatic turbine (7) is mechanically connected to said turbine engine (6) by means of at least one free-wheel (8).

4. Device according to any of claims 1 to 3, **characterised in that** said pneumatic storage (9) contains a mixture of gases comprising by mass at least 50% neutral gas, and a fire-extinguishing agent.

5. Device according to any of claims 1 to 4, **characterised in that** said pneumatic turbine (7) comprises a low-pressure supply socket configured so as to be able to carry out an integrity test on the kinematic chain formed by the pneumatic turbine (7) and the free-wheel (8).

6. Device according to any of claims 1 to 5, **characterised in that** said pneumatic valve (11) is controlled for position by electronic equipment and controlled for opening by pyrotechnic equipment.

7. Architecture of a propulsion system of a multi-engine helicopter comprising turbine engines (6, 16) connected to a power transmission unit (22),
**characterised in that** it comprises:
- at least one turbine engine (6, 16) among said turbine engines, referred to as a hybrid turbine engine, able to function in at least one standby regime during a stabilised flight of the helicopter, the other turbine engines functioning alone during this stabilised flight,
- at least one device for the rapid reactivation of a hybrid turbine engine according to one of claims 1 to 6, suitable for being able to bring this hybrid turbine engine out of said standby regime and to reach a so-called nominal regime in which it supplies mechanical power to said power transmission unit.

8. Architecture according to claim 7, **characterised in that** it comprises at least one fire-extinguishing device (26, 36) arranged in the vicinity of a turbine engine (6, 16) and connected to said pneumatic valve (11, 21) of a rapid reactivation device by means of so-called fire conduit (25, 35), so that said gas in said pneumatic storage (29, 39) of this startup device can be conducted on command from said valve (11, 12) to said extinguishing device.

9. Architecture according to either claim 7 or claim 8, **characterised in that** it comprises two hybrid turbine engines (6, 16) and two rapid reactivation devices according to any of claims 1 to 6, each hybrid turbine engine being associated with a dedicated reactivation device.

10. Architecture according to either claim 7 or claim 8, **characterised in that** it comprises two hybrid turbine engines (6, 16) and a single reactivation device according to one of claims 1 to 6 that comprises two pneumatic turbines (7, 17) connected respectively to each hybrid turbine engine (6, 16), said pneumatic valve (11) being a three-way valve controlled so as to orient the gas to said pneumatic turbine of the hybrid turbine engine to be reactivated.

11. Helicopter comprising a propulsion system **characterised in that** said propulsion system has an architecture according to any of claims 7 to 10.

12. Method for the reactive reactivation of a turbine engine (6) of a helicopter, **characterised in that** it comprises:
- a step of controlling the opening of a pneumatic valve (11) arranged on a pneumatic circuit (10) between a pneumatic storage (9) and a pneumatic turbine (7) mechanically connected to said turbine engine (6),
- a step of conveying the gas taken off to said pneumatic turbine (7),
- a step of transformation, by said pneumatic turbine (7), of the pneumatic power of said pressurised gas into mechanical power in order to reactivate the turbine engine (6).
